(19) Europäisches Patentamt / European Patent Office / Office européen des brevets

(11) **EP 4 007 219 B1**

(12) **FASCICULE DE BREVET EUROPEEN**

(45) Date de publication et mention de la délivrance du brevet:
**25.10.2023 Bulletin 2023/43**

(21) Numéro de dépôt: **21210145.5**

(22) Date de dépôt: **24.11.2021**

(51) Classification Internationale des Brevets (IPC):
**H04L 12/413** (2006.01)   **H04Q 9/00** (2006.01)

(52) Classification Coopérative des Brevets (CPC):
**H04L 12/413; H04Q 9/00;** H04Q 2209/30; H04Q 2209/60

(54) **PROCEDE DE COLLECTE D'INFORMATIONS D'UN ENSEMBLE DE COMPTEURS ELECTRIQUES**

VERFAHREN ZUR INFORMATIONSSAMMLUNG EINER GESAMTHEIT VON STROMZÄHLERN

METHOD FOR COLLECTING INFORMATION FROM A SET OF ELECTRIC METERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2020 FR 2012432**

(43) Date de publication de la demande:
**01.06.2022 Bulletin 2022/22**

(73) Titulaire: **Sagemcom Energy & Telecom SAS 92500 Rueil-Malmaison (FR)**

(72) Inventeur: **BAROIS, Jérôme 92500 RUEIL MALMAISON (FR)**

(74) Mandataire: **Cabinet Le Guen Maillet 3, impasse de la Vigie CS 71840 35418 Saint-Malo Cedex (FR)**

(56) Documents cités:
**WO-A1-2017/152951    WO-A1-2019/016053 US-A1- 2013 027 219**

**Description**

DOMAINE TECHNIQUE

La présente invention concerne un procédé de la collecte d'informations détenues par un ensemble de compteurs électriques reliés par un réseau d'alimentation électrique à un concentrateur de données avec lequel lesdits compteurs électriques communiquent grâce à des communications par courants porteurs en ligne CPL (« PowerLine Communications », PLC, en anglais).

ETAT DE LA TECHNIQUE ANTERIEURE

Les communications par courants porteurs en ligne se développent, notamment dans le cadre d'une gestion automatique de compteurs AMM (pour « Automated Meter Management » en anglais) dans des réseaux d'alimentation électrique. Des réseaux de communication sont ainsi implémentés au-dessus de réseaux d'alimentation électrique pour effectuer une collecte automatisée, auprès de compteurs électriques intelligents (« smart meters » en anglais), de données de relevés de consommation énergétique. Les communications par courants porteurs utilisent, par exemple, des protocoles de communication de type CPL, tels que le protocole G3-PLC (pour « Third Génération PLC » en anglais, selon la norme ITU-T G.9903) ou PRIME (pour « PoweRline Intelligent Metering Evolution » en anglais).

Un principe des communications par courants porteurs en ligne consiste à superposer à un signal d'alimentation électrique alternatif, appelé signal porteur ou porteuse, un signal d'information de plus haute fréquence et de faible énergie représentatif de données à transmettre.

Avec le développement de la gestion automatique de compteurs AMM sur les réseaux d'alimentation électrique se posent de nouveaux problèmes. Notamment, de tels réseaux de communication comportent un grand nombre de compteurs électriques pour lesquels un relevé d'informations (par exemple de courbes de charge) doit être effectué dans un temps restreint. Or de tels réseaux de communication utilisent une méthode d'accès au medium de type CSMA/CA (pour « Carrier Sense Multiple Access with Collision Avoidance » en anglais) au niveau contrôle d'accès au medium MAC (« Medium Access Control » en anglais), ce qui induit des collisions de transmissions de données et beaucoup de temps de contention, ce qui ralentit la collecte d'informations auprès des compteurs électriques. En effet, dans ce type de contrôle d'accès au médium, chaque dispositif qui souhaite transmettre des données écoute au préalable le médium afin de déterminer si ce médium est libre pour que ledit dispositif puisse transmettre ses données. Si le dispositif détecte que le médium est libre, il transmet ses données. Si au même moment, un autre dispositif émet des données sur le médium, les données se collisionnent. Dans ce cas, les deux dispositifs déterminent une durée aléatoire au bout de laquelle ils réécoutent le médium et refont une tentative de transmission si le médium est libre. Cette durée aléatoire est appelée temps (ou période) de contention. Il est préférable de minimiser le temps passé par les dispositifs dans des périodes de contention, pour limiter la latence de collecte des données auprès de ces dispositifs. On comprend en effet aisément que des communications de données qui se font directement, sans passer par des périodes de contention, sont plus rapides.

Des méthodes de multiplexage par division temporelle TDM (« Time Division Multiplex » en terminologie anglo-saxonne) existent, dans lesquelles, pour éviter que les compteurs électriques transmettent des informations au même moment, des cycles de périodes préétablies de temps de parole sont instaurés. Toutefois, ces méthodes ont l'inconvénient de nécessiter de synchroniser tous les compteurs électriques entre eux et sont connues pour être inefficaces en termes d'occupation du medium de communication.

Le demande internationale de brevet WO 2019/016053 A1 divulgue un procédé de relevé d'informations d'un ensemble de compteurs électriques reliés par un réseau d'alimentation électrique à un concentrateur de données, avec lequel lesdits compteurs communiquent par courant porteur en ligne. Le procédé se fonde sur un classement des compteurs en une pluralité de classes. Une première classe, relevée en premier, regroupe des compteurs n'ayant pas été relevés lors d'une dernière exécution du procédé. Les autres classes regroupent les compteurs en fonction d'un taux de réponse à des demandes d'informations émanant du concentrateur, les classes regroupant les compteurs ayant les taux de réponse les plus faibles étant relevées en dernier. Dans chaque classe, chaque compteur est classé en fonction d'une information représentative d'une topologie du réseau influant sur un risque d'échec des transmissions d'informations par ledit compteur. Le concentrateur prend en compte le classement des compteurs lors du relevé des compteurs dudit réseau pour réduire des occurrences de périodes de contention.

Il est souhaitable de pallier les inconvénients de l'état de la technique. Il est notamment souhaitable de proposer une méthode qui permette de relever un maximum de compteurs électriques dans un minimum de temps. Il est particulièrement souhaitable que cette méthode minimise le temps de contention sur le réseau de communication par courants porteurs en ligne. Il est de plus souhaitable de fournir une solution qui soit simple à mettre en oeuvre et à faible coût.

EXPOSE DE L'INVENTION

A cet effet, il proposé un procédé de collecte d'informations par un concentrateur de données auprès de compteurs électriques dans un réseau de communication par courants porteurs en ligne, le procédé étant exécuté par le concentrateur de données et comprend : obtenir une répartition des compteurs électriques dans une pluralité de classes, une première classe comprenant des compteurs électriques pour lesquels aucune information n'a été collectée au cours d'une exécution précédente du procédé, et au moins des deuxième et troisième classes dans lesquelles le reste des compteurs électriques est réparti selon un taux de réponse à des requêtes d'informations transmises par le concentrateur de données, les classes suivant un ordonnancement à compter de la deuxième classe par valeurs décroissantes desdits taux de réponses ; obtenir un ordonnancement des compteurs électriques, dans chaque classe, selon un risque global de contention encouru dans le réseau de communication par courants porteurs en ligne par chaque compteur électrique ; former une liste *L* d'au maximum *M* compteurs électriques sollicités en parallèle par le concentrateur de données pour la collecte d'informations ; envoyer une requête d'informations, pour ladite collecte, à chaque compteur électrique de la liste *L* ; pour chaque compteur électrique de la liste *L*, à réception d'une réponse à une requête d'informations émanant dudit compteur électrique pour ladite collecte ou à expiration d'un temps d'attente maximum prédéfini depuis l'envoi de ladite requête d'informations audit compteur électrique, retirer le compteur électrique de la liste *L* et chercher un autre compteur électrique à solliciter en parallèle des compteur électriques restants dans la liste *L*. Le procédé est tel que le concentrateur de données cherche à maximiser le nombre de compteurs électriques dans la liste *L* en priorisant les compteurs électriques selon l'ordonnancement des classes, puis selon l'ordonnancement des compteurs électriques selon le risque global de contention, et le concentrateur de données ajoute dans la liste *L* un nouveau compteur électrique uniquement si un score représentatif d'un risque de contention entre ledit nouveau compteur électrique et spécifiquement chacun des compteurs électriques présents dans la liste *L* est inférieur à un seuil STH prédéfini. Ainsi, la collecte d'informations permet de relever un maximum de compteurs électriques dans un minimum de temps. Le temps de contention sur le réseau de communication par courants porteurs en ligne est minimisé, tout en maximisant le nombre de compteurs électriques qui sont sollicités en parallèle.

Selon un mode de réalisation particulier, le score représentatif d'un risque de contention entre deux compteurs électriques est fonction d'un nombre de noeuds communs dans des chemins utilisés par les compteurs électriques en question pour communiquer avec le concentrateur de données dans le réseau de communication par courants porteurs en ligne et d'un écart de position de chaque noeud commun dans lesdits chemins.

Selon un mode de réalisation particulier, le score représentatif d'un risque de contention entre deux compteurs électriques *m* et *k,* est défini comme suit :

$$S_m^k = \sum_{j=1}^{Q} C \times w^E$$

où $S_m^k$ est le score représentatif d'un risque de contention entre les deux compteurs électriques *m* et *k,* *Q* est ledit nombre de noeuds communs, *j* est un index sur lesdits noeuds communs, *E* est ledit écart de position pour le noeud commun pointé par l'index *j,* *C* est un coût de contention par défaut pour chaque noeud commun dont l'écart *E* est nul, et *w* est un coefficient d'atténuation compris dans l'intervalle [0 ;1[.

Selon un mode de réalisation particulier, le risque global de contention du compteur électrique *m* est défini par

$$R_m = \sum_k S_m^k$$

Selon un mode de réalisation particulier, le risque global de contention *R* de chaque compteur électrique est proportionnel à un nombre de voisins dans un voisinage réseau dudit compteur électrique.

Selon un mode de réalisation particulier, le risque global de contention *R* de chaque compteur électrique est proportionnel à une densité, en termes de compteurs électriques présents, d'une zone du réseau de communication par courants porteurs en ligne à laquelle est affecté le compteur électrique en question.

Selon un mode de réalisation particulier, le concentrateur de données identifie chaque compteur électrique orphelin, qui est un compteur électrique pour lequel un chemin à utiliser pour communiquer avec le concentrateur de données n'est pas connu du concentrateur de données au moment de déclencher la collecte d'informations, exclut ledit compteur électrique orphelin des classes, et sollicite indépendamment chaque compteur électrique orphelin pour la collecte d'informations.

Il est aussi proposé un programme d'ordinateur qui peut être exécuté par un processeur. Ce programme d'ordinateur comprend des instructions pour implémenter le procédé mentionné ci-dessus dans l'un quelconque de ses modes de réalisation, lorsque ces instructions sont exécutées par le processeur. L'invention concerne également un support de stockage d'informations qui stocke un tel programme d'ordinateur et qui est destiné à être lu par le processeur afin d'implémenter le procédé mentionné ci-dessus dans l'un quelconque de ses modes de réalisation.

Il est aussi proposé un concentrateur de données configuré pour effectuer une collecte d'informations auprès de compteurs électriques dans un réseau de communication par courants porteurs en ligne, le concentrateur de données comportant de la circuiterie électronique configurée pour : obtenir une répartition des compteurs électriques dans une pluralité de classes, une première classe comprenant des compteurs électriques pour lesquels aucune information n'a été collectée au cours d'une exécution précédente du procédé, et au moins des deuxième et troisième classes dans lesquelles le reste des compteurs électriques est réparti selon un taux de réponse à des requêtes d'informations transmises par le concentrateur de données, les classes suivant un ordonnancement à compter de la deuxième classe par valeurs décroissantes desdits taux de réponses ; obtenir un ordonnancement des compteurs électriques, dans chaque classe, selon un risque global de contention encouru dans le réseau de communication par courants porteurs en ligne par chaque compteur électrique ; former une liste $L$ d'au maximum $M$ compteurs électriques sollicités en parallèle par le concentrateur de données pour la collecte d'informations ; envoyer une requête d'informations, pour ladite collecte, à chaque compteur électrique de la liste $L$ ; pour chaque compteur électrique de la liste $L$, à réception d'une réponse à une requête d'informations émanant dudit compteur électrique pour ladite collecte ou à expiration d'un temps d'attente maximum prédéfini depuis l'envoi de ladite requête d'informations audit compteur électrique, retirer le compteur électrique de la liste $L$ et chercher un autre compteur électrique à solliciter en parallèle des compteur électriques restants dans la liste $L$. La circuiterie électronique est configurée de sorte que le concentrateur de données cherche à maximiser le nombre de compteurs électriques dans la liste $L$ en priorisant les compteurs électriques selon l'ordonnancement des classes, puis selon l'ordonnancement des compteurs électriques selon le risque global de contention, et de sorte que le concentrateur de données ajoute dans la liste $L$ un nouveau compteur électrique uniquement si un score représentatif d'un risque de contention entre ledit nouveau compteur électrique et spécifiquement chacun des compteurs électriques présents dans la liste $L$ est inférieur à un seuil STH prédéfini.

Il est aussi proposé un réseau d'alimentation électrique comportant des compteurs électriques et un concentrateur de données en charge d'effectuer une collecte d'informations auprès des compteurs électriques, le concentrateur de données étant configuré comme ci-dessus.

Selon un mode de réalisation particulier, les informations concernées par la collecte sont des relevés de courbes de charge.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement un exemple de réseau d'alimentation électrique dans lequel une gestion automatique de compteurs de type AMM selon l'invention peut être implémentée ;
[Fig. 2] illustre schématiquement un exemple d'architecture matérielle d'un dispositif pouvant être utilisé pour implémenter l'invention ;
[Fig. 3] illustre schématiquement un procédé de collecte d'informations auprès de compteurs électriques, dans un mode de réalisation particulier de l'invention ; et [Fig. 4] illustre schématiquement un procédé de recherche de nouveau compteur électrique à solliciter, dans un mode de réalisation particulier de l'invention.

EXPOSE DETAILLE DE MODES DE REALISATION

Par la suite, des modes de réalisation de l'invention sont décrits dans un contexte où le protocole de communication par courants porteurs en ligne utilisé est le protocole G3-PLC. L'invention peut toutefois être implémentée en application d'autres protocoles s'appuyant sur un contrôle d'accès au medium de type CSMA/CA, comme par exemple le protocole PRIME.

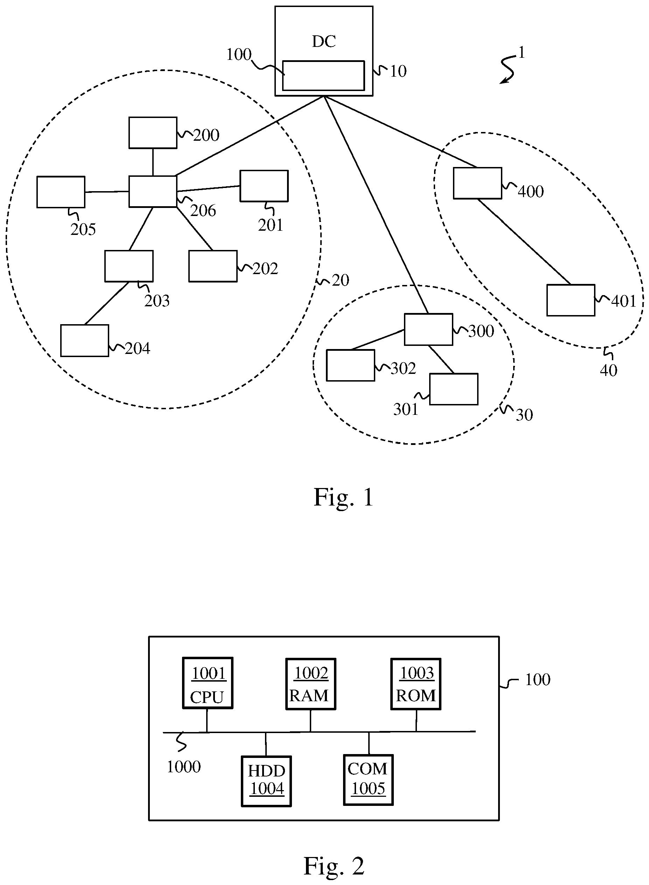

La **Fig. 1** illustre schématiquement un exemple de réseau d'alimentation électrique dans lequel une gestion automatique de compteurs de type AMM selon l'invention peut être implémentée. Le réseau d'alimentation électrique comporte $K$ compteurs électriques intelligents, appelés simplement « *compteurs électriques* » par la suite. Les compteurs électriques sont interconnectés par un réseau de communication par courants porteurs en ligne, appelé simplement « *réseau CPL* » par la suite.

La Fig. 1 montre un réseau CPL 1 comprenant un concentrateur de données DC (« data concentrator » en anglais) 10 auquel sont reliés directement ou indirectement un ensemble de compteurs électriques. Les compteurs électriques sont regroupés en trois groupes. Un premier groupe 20, qui comprend des compteurs électriques 200 à 206, correspond à une zone dense du réseau CPL 1. Une zone dense comprend des compteurs électriques ayant beaucoup de voisins dans leur voisinage réseau, i.e., ayant un nombre de voisins supérieur ou égal à un premier seuil. Le voisinage réseau d'un compteur électrique est l'ensemble des dispositifs du réseau CPL 1 depuis lesquels le compteur électrique en question reçoit directement des signaux de communication (typiquement des trames). Un deuxième groupe 30, qui comprend des compteurs électriques 300 à 302, correspond à une zone moyennement dense du réseau CPL 1. Une zone moyennement dense comprend des compteurs électriques ayant un nombre modéré de voisins dans leur voisinage réseau, i.e., ayant un nombre de voisins inférieur au premier seuil et supérieur ou égal à un deuxième seuil. Un troisième groupe 40, qui comprend des compteurs électriques 400 et 401, correspond à une zone peu dense du réseau CPL 1. Une zone peu dense comprend des compteurs électriques ayant un nombre modéré de voisins dans leur voisinage réseau, i.e., ayant un nombre de voisins inférieur au deuxième seuil.

Le concentrateur de données 10 comprend un module de traitement 100 implémentant le procédé selon l'invention. Le module de traitement 100 peut être un module matériel intégré nativement au concentrateur de données 10 ou être branché sur le concentrateur de données 10, par exemple sur un port USB (pour « Universal Serial Bus » en anglais) dudit concentrateur de données 10. Le module de traitement 100 peut en variante être un module logiciel exécuté à l'aide d'un processeur et d'une mémoire du concentrateur de données 10. Cet aspect est détaillé ci-après en relation avec la Fig. 2.

La **Fig. 2** illustre schématiquement un exemple d'architecture matérielle du module de traitement 100. Le module de traitement 100 comprend alors, reliés par un bus de communication 1000 : un processeur ou CPU (pour « Central Processing Unit » en anglais) 1001 ; une mémoire vive RAM (pour « Random Access Memory » en anglais) 1002 ; une mémoire morte ROM (pour « Read Only Memory » en anglais) 1003 ; un dispositif de stockage de données, tel qu'un disque dur HDD (pour « Hard Disk Drive » en anglais), ou un lecteur de support de stockage, tel qu'un lecteur de cartes SD (pour « Secure Digital » en anglais) 1004 ; un ensemble d'interfaces de communication 1005 permettant au module de traitement 100 de communiquer avec d'autres modules du concentrateur de données 10 et de communiquer directement, ou via ces autres modules du concentrateur de données 10, dans le réseau CPL 1.

Le processeur 1001 est capable d'exécuter des instructions chargées dans la RAM 1002 à partir de la ROM 1003, d'une mémoire externe (non représentée), d'un support de stockage, tel qu'une carte SD, ou d'un réseau de communication. Lorsque le concentrateur de données 10 est mis sous tension, le processeur 1001 est capable de lire de la RAM 1002 des instructions et de les exécuter. Ces instructions forment un programme d'ordinateur causant la mise en oeuvre, par le processeur 1001, des étapes et algorithmes décrits ici en relation avec le concentrateur de données 10 et plus particulièrement en relation avec le module de traitement 100.

Tout ou partie des étapes et algorithmes décrit ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié, tel qu'un FPGA (pour « Field-Programmable Gate Array » en anglais) ou un ASIC (pour « Application-Specific Integrated Circuit » en anglais). D'une manière générale, le module de traitement 100, et plus généralement le concentrateur de données 10, comprend de la circuiterie électronique agencée et configurée pour implémenter les étapes et algorithmes décrits ici.

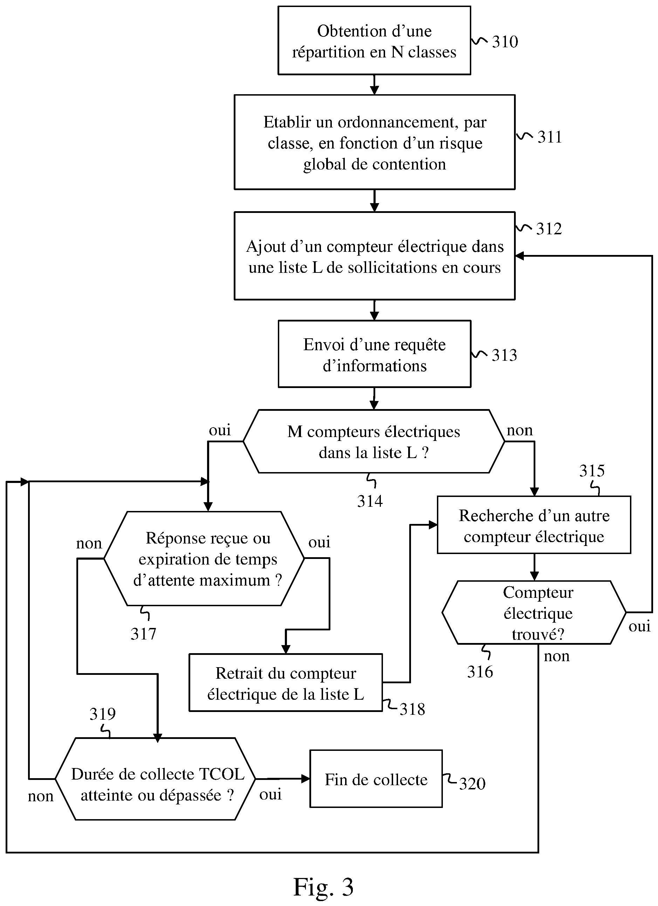

La **Fig. 3** illustre schématiquement un procédé de collecte d'informations auprès de compteurs électriques, dans un mode de réalisation particulier de l'invention. Le procédé décrit en relation avec la Fig. 3 est exécuté par le concentrateur de données 10, et plus précisément par le module de traitement 100. Le procédé de la Fig. 3 est exécuté périodiquement, ou sur requête, par exemple une requête émanant d'un serveur externe (e.g., d'un serveur d'un opérateur du réseau d'alimentation électrique).

Ce procédé est exécuté pendant une durée prédéfinie, dite durée de collecte TCOL, fixant un temps alloué au concentrateur de données 10 pour effectuer, auprès des compteurs électriques du réseau CPL 1, la collecte des informations requises (e.g. relevés de courbes de charge). Le concentrateur de données 10 tente donc de collecter des informations d'un maximum de compteurs électriques du réseau CPL 1 pendant ladite durée de collecte TCOL. Pour ce faire, le concentrateur de données 10 va utiliser notamment des informations relatives à la topologie du réseau CPL 1 pour diminuer les temps de contention. Le concentrateur de données 10 peut avoir une connaissance centralisée de la topologie du réseau CPL 1. Le concentrateur de données 10 peut aussi interroger des compteurs électriques pour en obtenir une liste de ses voisins et/ou des tables de routage. Des commandes du protocole DLMS / COSEM (pour « Device Language Message Spécification / Companion Spécification for Energy Metering » en anglais, selon la norme IEC 62056) peuvent être utilisées pour ce faire. Des commandes de plus bas niveau peuvent aussi être utilisées. Par exemple, selon la technologie G3-PLC, la fonction de découverte de route (« route discovery » en anglais) peut être utilisée pour déterminer le chemin entre le concentrateur de données 10 et tout compteur électrique du réseau CPL 1. Selon la technologie PRIME, le concentrateur de données implémente une fonction de noeud de base (« base node » en anglais) et est en ce sens gestionnaire de la topologie logique du réseau CPL 1. Le concentrateur de données connaît donc à tout moment la liste des noeuds commutateurs (« switches » en anglais) empruntés pour remonter des informations depuis tout compteur électrique du réseau CPL 1 vers le concentrateur de données.

Dans une étape 310, le module de traitement 100 obtient une description (e.g., une liste d'identifiants associés à des informations complémentaires) de l'ensemble des compteurs électriques concernés par la collecte d'informations. Cela pourrait être un sous-ensemble seulement des compteurs électriques du réseau CPL 1. Dans un mode de réalisation particulier, l'ensemble des compteurs électriques du réseau CPL 1 est concerné. Dans un mode de réalisation particulier, les informations à collecter sont des relevés de courbes de charge des compteurs électriques.

Ces compteurs électriques sont classés dans un nombre total prédéterminé N de classes. Dans un mode de réalisation particulier, N = 3. Une première classe, appelée « classe A », comprend des compteurs électriques pour lesquels aucune information n'a été collectée au cours d'une exécution dudit procédé précédant une exécution courante. Une deuxième classe, appelée « classe B », comprend des compteurs électriques ayant un taux de réponse à des requêtes d'informations « information request » en anglais) transmises par ledit concentrateur de données 10 qui est supérieur à un taux de référence REF prédéterminé. Une troisième classe, appelée « classe C », comprend des compteurs électriques ayant un taux de réponse aux requêtes d'informations transmises par ledit concentrateur de données 10 qui est inférieur ou égal audit taux de référence REF prédéterminé. Dans un mode de réalisation particulier, le taux de référence REF prédéterminé est égal à 50 % (ce qui correspond donc à un compteur électrique qui répond une fois sur deux). Un plus grand nombre de taux de référence peut être défini et ainsi augmenter le nombre de classes. La deuxième classe (classe B) a alors une frontière avec la troisième classe (classe C) fixée par un taux de référence REF1, la troisième classe (classe C) a une frontière avec la quatrième classe (classe D) fixée par un taux de référence REF2, etc. Ainsi, la répartition des compteurs électriques dans les N classes est telle qu'une première classe comporte des compteurs électriques pour lesquels aucune information n'a été collectée au cours d'une exécution précédente du procédé, et au moins des deuxième et troisième classes comportent le reste des compteurs électriques, qui y sont répartis selon leur taux de réponse aux requêtes d'informations transmises par le concentrateur de données 10, les classes étant ordonnées à compter de la deuxième classe par valeur décroissante desdits taux de réponses.

La description de l'ensemble des compteurs électriques concernés par la collecte d'informations indique, pour chaque compteur électrique, la classe à laquelle ce compteur électrique appartient lors de cette exécution de l'algorithme de la Fig. 3. La description obtenue à l'étape 310 est à jour concernant la répartition des compteurs électriques entre les classes au regard d'exécutions précédentes du procédé qui ont pu avoir lieu. Soit le module de traitement 100 détermine la répartition entre les classes à chaque début d'exécution de l'algorithme de la Fig. 3, soit le module de traitement 100 détermine la répartition entre les classes en tâche de fond et, à l'étape 310, le module de traitement 100 récupère en mémoire la répartition entre les classes qui est la plus à jour. La répartition des classes peut donc changer d'une exécution de l'algorithme de la Fig. 3 à une autre. Lors de la toute première exécution de l'algorithme de la Fig. 3, la répartition entre les classes est par exemple arbitraire, ou aléatoire.

La collecte d'informations va consister à solliciter des compteurs électriques parmi les trois classes en parallèle, mais en accordant une priorité entre les compteurs électriques en fonction de leurs classes : le concentrateur de données 10 sollicite préférentiellement les compteurs électriques de la classe A, mais si le concentrateur de données 10 détermine ne pas disposer d'autre compteur électrique de la classe A qui peut être sollicité en parallèle des compteurs électriques en cours d'interrogation, le concentrateur de données 10 cherche au moins un candidat dans la classe B. Le concentrateur de données 10 sollicite préférentiellement les compteurs électriques de la classe B par rapport à ceux de la classe C, mais si le concentrateur de données 10 détermine ne pas disposer d'autre compteur électrique de la classe B qui peut être sollicité en parallèle des compteurs électriques en cours d'interrogation, le concentrateur de données 10 cherche au moins un candidat dans la classe C. Et ainsi de suite.

En procédant ainsi, le module de traitement 100 privilégie les compteurs électriques n'ayant pas été sollicités lors de la dernière exécution du procédé de la Fig. 3, puis les compteurs électriques ayant globalement un bon taux de réponse et enfin les compteurs électriques ayant globalement un mauvais taux de réponse. Cependant, le module de traitement 100 pioche au besoin dans une ou plusieurs classes moins prioritaires pour optimiser la parallélisation des collectes auprès des compteurs électriques du réseau CPL 1.

De plus, de cette manière, le risque pour les compteurs électriques qui ont un mauvais taux de réponse de ralentir la collecte des informations auprès des autres compteurs électriques est réduit. En effet, un compteur électrique ayant un mauvais taux de réponse aux requêtes d'informations précédentes est un compteur électrique qui présente une forte probabilité de ne pas répondre à une nouvelle requête d'informations qui lui serait transmise. Or, un compteur électrique qui ne répond pas provoque des latences au niveau du concentrateur de données 10, puisque celui-ci doit attendre une expiration d'un temps d'attente (« timeout » en anglais) maximum prédéfini MAXTO avant de pouvoir considérer que le compteur électrique ne répond pas, et de passer à un autre compteur électrique du réseau CPL 1. Cette limitation est liée à la contrainte suivante : le concentrateur de données 10 n'est capable ou n'est autorisé qu'à solliciter une quantité M de compteurs électriques en parallèle. Le temps d'attente maximum prédéfini MAXTO est destiné à permettre au compteur électrique sollicité de disposer de suffisamment de temps en théorie (au regard, e.g., de spécifications de conception) pour fournir les informations requises par le concentrateur de données 10, y compris le temps de cheminement des communications dans le réseau CPL 1. Au contraire, un compteur électrique ayant un bon taux de réponse présente une forte probabilité de répondre quasi-immédiatement à une demande d'informations et le concentrateur de données 10 n'a ainsi pas à attendre l'expiration du temps d'attente maximum prédéfini MAXTO pour pouvoir passer à un autre compteur électrique du réseau CPL 1. Ce traitement des compteurs électriques par classe permet donc déjà d'accélérer la collecte d'informations par rapport à une prise en compte aléatoire ou arbitraire des compteurs électriques.

La description de l'algorithme de la Fig. 3 ci-après considère de manière illustrative les trois classes A, B et C susmentionnées ($N$ = 3), mais peut être aisément dérivée pour supporter un plus grand nombre de classes.

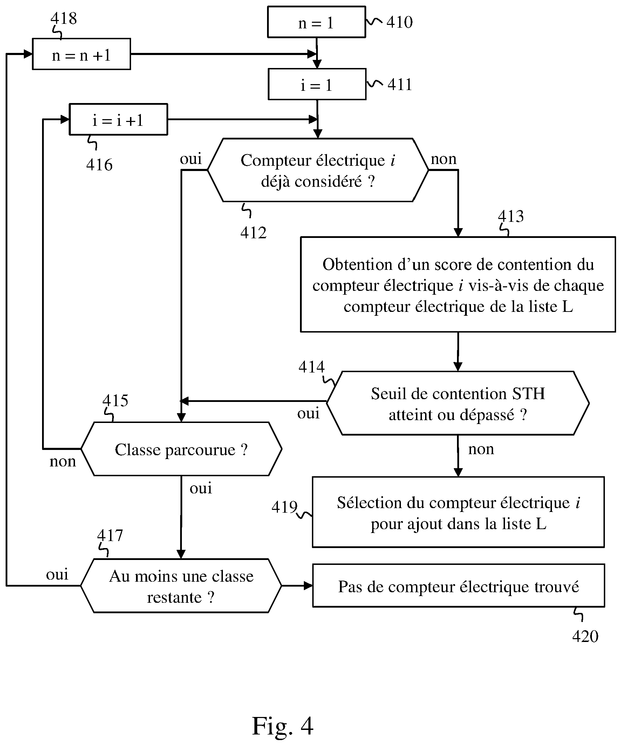

Dans une étape 311, le module de traitement 100 établit un ordonnancement, par classe, des compteurs électriques en fonction d'un risque global de contention $R$ pour une transmission effectuée depuis le compteur électrique considéré jusqu'au concentrateur de données 10, au regard de la topologie du réseau CPL 1. L'ordonnancement est tel que les compteurs électriques sont présentés par valeurs décroissantes de leur risque global de contention $R$. Cet ordonnancement permet par la suite, sous certaines conditions (voir Fig. 4), de solliciter en priorité des compteurs électriques qui présentent un moindre risque de contention lorsqu'ils sont sollicités par le concentrateur de données 10.

Il convient de noter que le risque $R$ est un risque global de contention, à distinguer du score de contention $5$ qui est utilisé ci-après dans le cadre de la Fig. 4 et qui est représentatif d'un risque de contention entre deux compteurs électriques lorsque ces deux compteurs électriques sont sollicités en parallèle par le concentrateur de données 10. Toutefois, comme expliqué à la suite de la description de la Fig. 4, le risque global de contention $R_m$ associé à un compteur électrique $m$ peut être calculé, dans un mode de réalisation particulier, comme la somme des scores de contention $S_m^k$ entre ce compteur électrique $m$ et tous les $K-1$ autres compteurs électriques $k$ ($k \neq m$) du réseau CPL 1.

Dans un autre mode de réalisation particulier, le risque global de contention $R$ d'un compteur électrique est proportionnel au nombre de voisins dans le voisinage réseau dudit compteur électrique. En effet, plus le voisinage réseau d'un compteur électrique est important en termes de nombre de voisins, plus le risque de contention est élevé pour les transmissions dudit compteur électrique.

Dans encore un autre mode de réalisation particulier, le risque global de contention $R$ d'un compteur électrique est proportionnel à une densité, en termes de compteurs électriques présents, d'une zone du réseau CPL 1 à laquelle est affecté le compteur électrique en question. En effet, plus la zone est dense en termes de compteurs électriques présents, plus le risque de contention est élevé pour les transmissions de ces compteurs électriques. La définition des zones du réseau CPL 1 et de leurs densités peut correspondre à des zones géographiques prédéfinies dont la densité de population est connue. La définition des zones du réseau CPL 1 pour l'affectation des compteurs électriques concernés, et de leurs densités, est par exemple préinstallée en mémoire du concentrateur de données 10.

Lorsque deux compteurs électriques ont le même risque global de contention $R$, le module de traitement 100 choisit l'ordre entre ces deux compteurs électriques en appliquant un critère complémentaire, ou de manière arbitraire, ou de manière aléatoire.

Dans une étape 312, le module de traitement 100 ajoute un identifiant du compteur électrique sélectionné dans une liste $L$. La liste $L$ indique quels compteurs électriques sont sollicités en parallèle. A la première occurrence de l'étape 312, la liste $L$ est vide et le module de traitement 100 y place un identifiant du compteur électrique indiqué, pour la classe A, en premier lieu selon l'ordonnancement établi à l'étape 311.

Dans une étape 313, le module de traitement 100 envoie une requête d'informations au compteur électrique qui a été ajouté à la liste $L$. La requête d'informations est transmise en mode point-à-point (« unicast » en anglais), par exemple sous la forme d'une commande DLMS/COSEM.

Dans l'étape 314, le module de traitement 100 vérifie si $M$ compteurs électriques sont présents dans la liste $L$. En effet, comme déjà indiqué, le concentrateur de données 10 est capable ou est autorisé à ne solliciter que M compteurs électriques en parallèle. Si la liste $L$ contient $M$ compteurs électriques, une étape 317 est effectuée ; sinon, une étape 315 est effectuée.

Dans l'étape 315, le module de traitement 100 recherche si un autre compteur électrique peut venir compléter la liste $L$. Le module de traitement 100 cherche à maximiser le nombre de compteurs électriques effectivement dans la liste $L$ (donc qui sont sollicités en parallèle), en priorisant les compteurs électriques selon l'ordonnancement des classes, puis selon l'ordonnancement des compteurs électriques selon le risque global de contention. Le module de traitement 100 ajoute dans la liste $L$ un nouveau compteur électrique uniquement si le score de contention S entre ledit nouveau compteur électrique et spécifiquement chacun des compteurs électriques présents dans la liste $L$ est inférieur à un seuil STH prédéfini (fixe). Un mode de réalisation particulier est détaillé ci-après en relation avec la Fig. 4.

Dans l'étape 316, le module de traitement 100 détermine si un compteur électrique a été trouvé à l'étape 315. Si tel est le cas, l'étape 312 est répétée pour ajouter, dans la liste $L$, le compteur électrique trouvé et lui envoyer une requête d'informations dans l'étape 313. Si aucun compteur électrique n'a été trouvé, cela signifie que la liste $L$ ne contient pas $M$ compteurs électriques mais les candidats restants présentent un trop fort risque de contention. Le déblocage de cette situation passe par le retrait d'un compteur électrique de la liste *L,* soit par réception d'une réponse dudit compteur électrique à la requête d'informations qui lui a été envoyée par le concentrateur de données 10 à l'étape 313, soit par l'expiration du temps d'attente maximum prédéfini MAXTO. Alors l'étape 317 est effectuée.

Dans l'étape 317, le module de traitement 100 détermine si le concentrateur de données 10 a reçu une réponse d'un compteur électrique identifié dans la liste *L* ou si le temps d'attente maximum prédéfini MAXTO a été atteint ou dépassé depuis l'envoi de la requête d'informations à un compteur électrique identifié dans la liste *L.* Si tel est le cas, une étape 318 est effectuée ; sinon, une étape 319 est effectuée.

Dans l'étape 318, le module de traitement 100 retire, de la liste *L,* le compteur électrique dont la réponse a été reçue (et donc pour lequel les informations recherchées ont été collectées) ou pour lequel le temps d'attente maximum prédéfini MAXTO a été atteint ou dépassé depuis que lui a été envoyé la requête d'informations. Une place se libère donc dans la liste *L* et le module de traitement 100 peut considérer solliciter un autre compteur électrique en parallèle de ceux encore présents dans la liste *L.* L'étape 315 est par conséquent effectuée.

Dans l'étape 319, le module de traitement 100 vérifie que la durée écoulée depuis le début de l'exécution du procédé de la Fig. 3 est inférieure à la durée de collecte TCOL. Si la durée de collecte TCOL est atteinte ou dépassée, l'étape 317 est répétée. Sinon, le module de traitement 100 met fin au procédé dans une étape 320.

La **Fig. 4** illustre schématiquement un procédé de recherche de nouveau compteur électrique à solliciter, dans un mode de réalisation particulier de l'invention. L'algorithme de la Fig. 4 propose un mode de réalisation de l'étape 315.

Dans une étape 410, le module de traitement 100 initialise une variable *n* à « 1 ». La variable *n* est utilisée pour parcourir les classes par ordre croissant, c'est-à-dire de la première (classe A, *n* = 1) à la troisième (classe C, *n* = 3) dans l'exemple à trois classes déjà abordé.

Dans une étape 411, le module de traitement 100 initialise une variable *i* à « 1 ». La variable *i* est utilisée pour parcourir, au sein d'une classe, les compteurs électriques selon l'ordonnancement établi à l'étape 311.

Dans une étape 412, le module de traitement 100 détermine si le compteur électrique *i* a déjà été considéré dans la collecte d'informations en cours. Si tel est le cas, le module de traitement 100 doit évaluer si un autre compteur électrique peut rejoindre la liste *L,* et une étape 415 est effectuée. Sinon, une étape 413 est effectuée.

Dans l'étape 413, le module de traitement 100 obtient un score de contention du compteur électrique *i* vis-à-vis de chaque compteur électrique de la liste *L.* Le score de contention est donc représentatif d'un risque de contention pour une paire de compteurs électriques (qui peuvent être de classes différentes) considérée, c'est-à-dire d'un risque qu'une transmission d'informations ayant pour origine un compteur électrique de la paire entre en collision, à quelque endroit que ce soit sur le chemin à destination du concentrateur de données 10, avec une transmission simultanée d'informations ayant pour origine de l'autre compteur électrique de la paire, ou d'un risque que des messages envoyés au même moment par ces deux compteurs électriques obligent un noeuds assurant le rôle de relai à mettre un de ces messages en attente. Plus le score de contention est élevé, plus le risque de contention lors de sollicitations simultanées des compteurs électriques considérés est élevé.

Dans un mode de réalisation particulier, le score de contention *S* est fonction d'un nombre *Q* de noeuds communs sur les chemins qui relient les deux compteurs électriques de la paire avec le concentrateur de données 10 et, le cas échéant, de l'écart *E* entre le nombre de sauts (« hops » en anglais) nécessaires pour atteindre le noeud commun en question depuis l'un des compteurs électriques de la paire et le nombre de sauts nécessaires pour atteindre le noeud commun en question depuis l'autre des compteurs électriques de la paire. Préférentiellement, le score de contention $S_m^k$ entre le compteur électrique *m* et le compteur électrique *k* est défini comme suit :

$$S_m^k = \sum_{j=1}^{Q} C \times w^E$$

où le paramètre *C* est un coût de contention par défaut attribué pour chaque noeud en commun situé à égale distance (en nombre de sauts) des deux compteurs électriques *m* et *k.* Le paramètre *C* est positif et est par exemple obtenu expérimentalement. Le paramètre w est un coefficient d'atténuation prédéfini qui vient atténuer l'impact du coût prédéfini *C* dans le calcul du score de contention *S* lorsque le noeud commun présente un écart *E* non nul (en différence de sauts) sur les deux chemins, i.e., lorsque ledit noeud commun n'est pas à la même position sur les deux chemins. Donc, quand l'écart *E* est nul (même position sur les deux chemins), le coût de contention par défaut *C* est appliqué. Le paramètre w est une valeur positive comprise dans l'intervalle [0 ;1[. Plus cet écart *E* est grand, plus la contribution du noeud commun en question dans le calcul du score de contention *S* est faible.

Dans un exemple de réalisation, *C* = 0,75 et *w* = 0,5. Considérons d'après la Fig. 1 que :

- le chemin qui relie le compteur électrique 200 au concentrateur de données 10 passe par le compteur électrique 206 qui assure le rôle de relai ;
- le chemin qui relie le compteur électrique 201 au concentrateur de données 10 passe par le compteur électrique 206 qui assure le rôle de relai ;
- le chemin qui relie le compteur électrique 204 au concentrateur de données 10 passe par le compteur électrique 203, puis par le compteur électrique 206, qui assurent le rôle de relais ;
- le compteur électrique 302 est directement relié au concentrateur de données 10 (sans relai).

Tous les chemins ont donc au moins le concentrateur de données 10 en commun.

La paire constituée des compteurs électriques 200 et 201 a deux noeuds en commun situés à égales positions sur les deux chemins (donc $E = 0$). Dans ce cas, le score de contention $S$ pour cette paire, noté $S_{200}^{201}$, est :

$$S_{200}^{201} = 0.75 \times 0.5^0 + 0.75 \times 0.5^0 = 1.5$$

La paire constituée des compteurs électriques 200 et 204 a deux noeuds en commun dont les positions sont décalées d'un saut entre les deux chemins (donc $E = 1$). Dans ce cas, le score de contention S pour cette paire, noté $S_{200}^{204}$, est :

$$S_{200}^{204} = 0.75 \times 0.5^1 + 0.75 \times 0.5^1 = 0.75$$

La paire constituée des compteurs 200 et 302 a un noeud en commun situé à égale position sur les deux chemins (donc $E = 0$). Dans ce cas, le score de contention $S$ pour cette paire, noté $S_{200}^{302}$, est :

$$S_{200}^{302} = 0.75 \times 0.5^0 = 0.75$$

En comparant le score de contention avec le seuil prédéfini STH déjà mentionné (par exemple, le seuil prédéfini STH est fixé expérimentalement), le module de traitement 100 peut évaluer si les compteurs électriques en question présentent ou pas trop de risques de contention s'ils devaient être sollicités en parallèle par le concentrateur de données 10.

Ainsi, dans une étape 414, le module de traitement 100 vérifie si le score de contention du compteur électrique *i* vis-à-vis d'au moins un compteur électrique de la liste *L* est supérieur au seuil prédéfini STH. Par exemple, dans l'exemple numérique ci-dessous, le seuil prédéfini STH est fixé à « 1 ».

Si le score de contention du compteur électrique *i* vis-à-vis d'au moins un compteur électrique de la liste *L* a atteint ou dépassé le seuil prédéfini STH, le module de traitement 100 considère que le compteur électrique *i* présente trop de risques de contention avec au moins un compteur électrique présent dans la liste *L.* Le module de traitement 100 doit alors évaluer si un autre compteur électrique peut rejoindre la liste *L,* et l'étape 415 est effectuée. Si le score de contention du compteur électrique *i* vis-à-vis d'aucun compteur électrique de la liste *L* a atteint ou dépassé le seuil prédéfini STH, le module de traitement 100 considère que le compteur électrique *i* peut être sollicité en parallèle de tout compteur électrique présent dans la liste *L* et que le compteur électrique *i* peut être ajouté dans la liste *L.* Une étape 419 est alors effectuée, dans laquelle le module de traitement 100 sélectionne le compteur électrique *i* pour être ajouté à la liste *L* et il est mis fin à l'algorithme de la Fig. 4.

Dans l'étape 415, le module de traitement 100 vérifie si l'ensemble de la classe désignée par la variable *n* a été parcouru. Si tel est le cas, une étape 417 est effectuée ; sinon, une étape 416 est effectuée.

Dans l'étape 416, le module de traitement 100 incrémente la variable *i* d'une unité afin de considérer le compteur électrique suivant, dans la classe *n,* selon l'ordonnancement établi à l'étape 311. L'étape 412 est alors répétée pour vérifier si le compteur électrique nouvellement représenté par la variable i a déjà été considéré dans la collecte d'informations en cours.

Dans l'étape 417, le module de traitement 100 vérifie s'il reste au moins une classe à parcourir, ce qui est le cas si *n* < N. Si tel est le cas, une étape 418 est effectuée.

Dans l'étape 418, le module de traitement 100 incrémente la variable *n* d'une unité afin de considérer la classe suivante selon l'ordre de priorité fixé. L'étape 411 est alors répétée pour remettre la variable *i* à « 1 », afin de commencer à parcourir la classe nouvellement sélectionnée selon l'ordonnancement établi à l'étape 311.

Dans l'étape 419, le module de traitement 100 sélectionne le compteur électrique *i* pour être ajouté à la liste *L*. Le compteur électrique *i* va donc ainsi être sollicité en parallèle des compteurs électriques déjà présents dans la liste *L*. Il est mis fin à l'algorithme de la Fig. 4.

Dans l'étape 420, le module de traitement 100 met fin à l'algorithme de la Fig. 4 sans avoir trouvé de compteur électrique apte à être sollicité en parallèle des compteurs électriques présents dans la liste *L*. Comme déjà expliqué en relation avec la Fig. 3, le module de traitement 100 doit alors attendre qu'au moins un compteur électrique sorte de la liste *L*, pour tenter de chercher à nouveau à compléter ladite liste *L*. Il est mis fin à l'algorithme de la Fig. 4.

Le risque global de contention *R* divulgué dans le cadre de la Fig. 3 peut, dans un mode de réalisation particulier, être la somme des scores de contention de toutes les paires possibles du réseau CPL 1 qui comportent le compteur électrique auquel le risque global de contention *R* s'applique. En reprenant la formule préférentielle de calcul du score de contention *S* exprimée ci-dessus :

$$R_m = \sum_k S_m^k$$

où $R_m$ représente le risque global de contention pour le compteur électrique *m*, $S_m^k$ représente le score de contention pour la paire formée par le compteur électrique *m* et le compteur électrique *k* ($k \neq m$). Il n'est pas tenu compte du concentrateur de données 10.

En prenant l'exemple du compteur électrique 200 sur la Fig. 1 :

$$R_{200} = S_{200}^{201} + S_{200}^{202} + S_{200}^{203} + S_{200}^{204} + S_{200}^{205} + S_{200}^{206} + S_{200}^{300} + S_{200}^{301} + S_{200}^{302} + S_{200}^{400} + S_{200}^{401}$$

Utiliser une moyenne de ces scores de contention pour calculer le risque global de contention donne le même résultat relatif d'un compteur électrique à un autre.

Dans un mode de réalisation particulier, le module de traitement 100 traite séparément chaque compteur électrique pour lequel le chemin à utiliser pour communiquer avec le concentrateur de données 10 n'est pas complètement connu du concentrateur de données 10 au moment du déclenchement de la collecte d'informations. On parle de compteur électrique « orphelin ». Dans ce cas, le module de traitement 100 identifie chaque compteur électrique orphelin et ne l'exclut des classes. Chaque compteur électrique orphelin peut être sollicité avant les compteurs électriques classés (ceux pour lesquels le chemin à utiliser pour communiquer avec le concentrateur de données 10 est connu du concentrateur de données 10 au moment de déclencher la collecte d'informations) ou après. Les sollicitations des compteurs électriques orphelins peuvent être réparties entre avant et après, selon un critère prédéterminé. Lorsqu'il y a plusieurs compteurs électriques orphelins, leur sollicitation par le concentrateur de données 10 se fait sans parallélisation.

**Revendications**

1.  Procédé de collecte d'informations par un concentrateur de données (10) auprès de compteurs électriques (200, 301, 400) dans un réseau de communication par courants porteurs en ligne (1), exécuté par le concentrateur de données (10) et comprenant :

    - obtenir (310) une répartition des compteurs électriques (200, 301, 400) dans une pluralité de classes, une première classe comprenant des compteurs électriques (200, 301, 400) pour lesquels aucune information n'a été collectée au cours d'une exécution précédente du procédé, et au moins des deuxième et troisième classes dans lesquelles le reste des compteurs électriques (200, 301, 400) est réparti selon un taux de réponse à des requêtes d'informations transmises par le concentrateur de données (10), les classes suivant un ordonnancement à compter de la deuxième classe par valeurs décroissantes desdits taux de réponses ;
    - former (312) une liste *L* d'au maximum *M* compteurs électriques sollicités en parallèle par le concentrateur de données (10) pour la collecte d'informations ;
    - envoyer (313) une requête d'informations, pour ladite collecte, à chaque compteur électrique de la liste *L* ;
    - pour chaque compteur électrique de la liste *L*, à réception (317) d'une réponse à une requête d'informations émanant dudit compteur électrique pour ladite collecte ou à expiration (317) d'un temps d'attente maximum prédéfini depuis l'envoi (313) de ladite requête d'informations audit compteur électrique, retirer (318) le compteur électrique de la liste *L* et chercher (315) un autre compteur électrique à solliciter en parallèle des compteurs électriques restants dans la liste *L* ;
    le procédé étant tel que le concentrateur de données (10) ajoute (312) dans la liste *L* un nouveau compteur électrique uniquement si un score représentatif d'un risque de contention entre ledit nouveau compteur électrique et spécifiquement chacun des compteurs électriques présents dans la liste *L* est inférieur à un seuil STH prédéfini, **caractérisé en ce que** le procédé comporte en outre :

- établir (311) un ordonnancement des compteurs électriques (200, 301, 400), dans chaque classe, selon un risque global de contention encouru dans le réseau de communication par courants porteurs en ligne (1) par chaque compteur électrique (200, 301, 400) ;

et tel que le concentrateur de données (10) cherche à maximiser le nombre de compteurs électriques dans la liste *L* parmi les classes en parallèle, en priorisant les compteurs électriques (200, 301, 400) selon l'ordonnancement des classes, puis selon l'ordonnancement des compteurs électriques (200, 301, 400) selon le risque global de contention.

2. Procédé selon la revendication 1, dans lequel le score représentatif d'un risque de contention entre deux compteurs électriques (200, 201) est fonction d'un nombre de noeuds communs (206, 10) dans des chemins utilisés par les compteurs électriques en question (200, 201) pour communiquer avec le concentrateur de données (10) dans le réseau de communication par courants porteurs en ligne (1) et d'un écart de position de chaque noeud commun (206, 10) dans lesdits chemins.

3. Procédé selon la revendication 2, dans lequel le score représentatif d'un risque de contention entre deux compteurs électriques *m* et *k,* est défini comme suit :

$$S_m^k = \sum_{j=1}^{Q} C \times w^E$$

où $S_m^k$ est le score représentatif d'un risque de contention entre les deux compteurs électriques *m* et *k, Q* est ledit nombre de noeuds communs, *j* est un index sur lesdits noeuds communs, *E* est ledit écart de position pour le noeud commun pointé par *l'index j, C* est un coût de contention par défaut pour chaque noeud commun dont l'écart E est nul, et w est un coefficient d'atténuation compris dans l'intervalle [0 ;1[.

4. Procédé selon la revendication 3, dans lequel le risque global de contention du compteur électrique *m* est défini par

$$R_m = \sum_k S_m^k$$

5. Procédé selon l'une quelconque des revendications 1 à 3, dans lequel le risque global de contention de chaque compteur électrique (200, 301, 400) est proportionnel à un nombre de voisins dans un voisinage réseau dudit compteur électrique (200, 301, 400).

6. Procédé selon l'une quelconque des revendications 1 à 3, dans lequel le risque global de contention de chaque compteur électrique (200, 301, 400) est proportionnel à une densité, en termes de compteurs électriques présents, d'une zone du réseau de communication par courants porteurs en ligne (1) à laquelle est affecté le compteur électrique en question (200, 301, 400).

7. Procédé selon l'une des revendications 1 et 2, dans lequel le concentrateur de données (10) identifie chaque compteur électrique orphelin, qui est un compteur électrique pour lequel un chemin à utiliser pour communiquer avec le concentrateur de données (10) n'est pas connu du concentrateur de données (10) au moment de déclencher la collecte d'informations, exclut ledit compteur électrique orphelin des classes, et sollicite indépendamment chaque compteur électrique orphelin pour la collecte d'informations.

8. Produit programme d'ordinateur comportant des instructions pour implémenter le procédé selon l'une quelconque des revendications 1 à 7, lorsque lesdites instructions sont exécutées par un processeur (1001).

9. Support de stockage d'informations stockant un programme d'ordinateur comportant des instructions pour implémenter le procédé selon l'une quelconque des revendications 1 à 7, lorsque lesdites instructions sont lues depuis le support de stockage d'informations et exécutées par un processeur (1001).

10. Concentrateur de données (10) configuré pour effectuer une collecte d'informations auprès de compteurs électriques (200, 301, 400) dans un réseau de communication par courants porteurs en ligne (1), le concentrateur de données (10) comportant de la circuiterie électronique configurée pour :

- obtenir (310) une répartition des compteurs électriques (200, 301, 400) dans une pluralité de classes, une première classe comprenant des compteurs électriques pour lesquels aucune information n'a été collectée au cours d'une exécution précédente du procédé, et au moins des deuxième et troisième classes dans lesquelles le reste des compteurs électriques est réparti selon un taux de réponse à des requêtes d'informations transmises par le concentrateur de données (10), les classes suivant un ordonnancement à compter de la deuxième classe par valeurs décroissantes desdits taux de réponses ;
- former (312) une liste L d'au maximum M compteurs électriques sollicités en parallèle par le concentrateur de données (10) pour la collecte d'informations ;
- envoyer (313) une requête d'informations, pour ladite collecte, à chaque compteur électrique de la liste L ;
- pour chaque compteur électrique de la liste L, à réception (317) d'une réponse à une requête d'informations émanant dudit compteur électrique pour ladite collecte ou à expiration (317) d'un temps d'attente maximum prédéfini depuis l'envoi de ladite requête d'informations audit compteur électrique, retirer (318) le compteur électrique de la liste L et chercher (315) un autre compteur électrique à solliciter en parallèle des compteurs électriques restants dans la liste L ;

la circuiterie électronique étant configurée de sorte que le concentrateur de données (10) ajoute dans la liste L un nouveau compteur électrique uniquement si un score représentatif d'un risque de contention entre ledit nouveau compteur électrique et spécifiquement chacun des compteurs électriques présents dans la liste L est inférieur à un seuil STH prédéfini, **caractérisé en ce que** la circuiterie électronique est en outre configurée pour :

- établir (311) un ordonnancement des compteurs électriques (200, 301, 400), dans chaque classe, selon un risque global de contention encouru dans le réseau de communication par courants porteurs en ligne (1) par chaque compteur électrique (200, 301, 400) ;

et de sorte que le concentrateur de données (10) cherche à maximiser le nombre de compteurs électriques dans la liste L parmi les classes en parallèle, en priorisant les compteurs électriques selon l'ordonnancement des classes, puis selon l'ordonnancement des compteurs électriques selon le risque global de contention.

11. Réseau d'alimentation électrique comportant des compteurs électriques (200, 301, 400) et un concentrateur de données (10) en charge d'effectuer une collecte d'informations auprès des compteurs électriques (200, 301, 400), le concentrateur de données (10) étant configuré selon la revendication 10.

12. Réseau d'alimentation électrique selon la revendication 11, dans lequel les informations concernées par la collecte sont des relevés de courbes de charge.

**Patentansprüche**

1. Verfahren zum Sammeln von Informationen durch einen Datenkonzentrator (10) von Stromzählern (200, 301, 400) in einem Powerline Communication-Netzwerk (1). Es wird von dem Datenkonzentrator (10) ausgeführt und umfasst Folgendes:

- Erhalt (310) einer Aufteilung der Stromzähler (200, 301, 400) in eine Vielzahl von Klassen, wobei eine erste Klasse die Stromzähler (200, 301, 400) umfasst, für die während einer vorherigen Ausführung des Verfahrens keine Informationen gesammelt wurden, und mindestens eine zweite und eine dritte Klasse, in die der Rest der Stromzähler (200, 301, 400) aufgeteilt wird. Diese Klassen sind abhängig von der Antwortrate auf Informationsanfragen, die vom Datenkonzentrator übermittelt werden (10) und folgen ab der zweiten Klasse einer Reihenfolge nach absteigenden Werten der genannten Antwortquoten;
- Bildung (312) einer Liste L von höchstens M Stromzählern, die parallel von dem Datenkonzentrator (10) zum Sammeln von Informationen angefordert werden;
- Sendung (313) einer Informationsanfrage für die Sammlung an jeden Stromzähler in der Liste L;
- für jeden Stromzähler in der Liste L gilt: bei Empfang (317) einer Antwort auf eine Informationsanfrage von dem Stromzähler für die Sammlung ODER bei Ablauf (317) einer vordefinierten maximalen Wartezeit seit der Sendung (313) der Informationsanfrage an den Stromzähler, wird der Stromzähler aus der Liste *L* entfernt (318) *und* ein anderer Stromzähler, der parallel zu den verbleibenden Stromzählern in der Liste *L* angefordert werden soll, wird gesucht (315);

Das Verfahren ist derart, dass der Datenkonzentrator (10) der Liste *L* nur dann einen neuen Stromzähler hinzufügt (312), wenn eine Punktzahl, die für ein Risiko eines Konflikts zwischen dem neuen Stromzähler und spezifisch jedem der Stromzähler in der Liste *L* repräsentativ ist, unter einem vordefinierten STH-Schwellenwert liegt. Dies ist **dadurch gekennzeichnet, dass** das Verfahren ferner Folgendes umfasst:

- Erstellen (311) einer Reihenfolge der Stromzähler (200, 301, 400) in jeder Klasse gemäß einem Gesamtrisiko eines Konflikts, der im Powerline Communication-Netzwerk (1) von jedem Stromzähler (200, 301, 400) entstehen kann;

Und derart, dass der Datenkonzentrator (10) versucht, die Anzahl der Stromzähler in der Liste *L* innerhalb der Klassen parallel zu maximieren, indem er die Stromzähler (200, 301, 400) gemäß der Reihenfolge der Klassen und dann gemäß der Reihenfolge der Stromzähler (200, 301, 400) gemäß dem Gesamtrisiko eines Konflikts priorisiert.

2. Verfahren nach Anspruch 1, bei dem die Punktzahl, die für ein Risiko eines Konflikts zwischen zwei Stromzählern (200, 201) repräsentativ ist, von einer Anzahl gemeinsamer Knoten (206, 10) innerhalb der Pfade, die von den betreffenden Stromzählern (200, 201) zur Kommunikation mit dem Datenkonzentrator (10) im Powerline Communication-Netzwerk (1) und von einer Positionsabweichung jedes gemeinsamen Knotens (206, 10) in diesen Pfaden abhängt.

3. Verfahren nach Anspruch 2, bei dem die Punktzahl, die für ein Risiko eines Konflikts zwischen zwei Stromzählern *m* und *k* steht, wie folgt definiert wird:

$$S_m^k = \sum_{j=1}^{Q} C \, X \, W^E$$

Wobei $S_m^k$ die Punktzahl darstellt, die repräsentativ für ein Risiko eines Konflikts zwischen den beiden Stromzählern *m* und *k* ist. *Q* ist die genannte Anzahl gemeinsamer Knoten, *j* ist ein Index auf den genannten gemeinsamen Knoten, E ist die Positionsabweichung für den gemeinsamen Knoten, auf den der Index *j* gerichtet ist, C sind die Standard-Konflikt-Kosten für jeden gemeinsamen Knoten, bei dem die Abweichung *E* null ist und w ist ein Schwächungskoeffizient im Intervall [0;1[.

4. Verfahren nach Anspruch 3, bei dem das Gesamtrisiko eines Konflikts des Stromzählers *m* wie folgt definiert wird:

$$R_m = \sum_{k} S_m^k$$

5. Verfahren nach einem der Ansprüche 1 bis 3, bei dem das Gesamtrisiko eines Konflikts bei jedem Stromzähler (200, 301, 400) proportional zu einer Anzahl von Nachbarn in einer Netzwerkumgebung des Stromzählers (200, 301, 400) ist.

6. Verfahren nach einem der Ansprüche 1 bis 3, bei dem das Gesamtrisiko eines Konflikts bei jedem Stromzähler (200, 301, 400) proportional zu einer Dichte, in Form von vorhandenen Stromzählern, eines Bereichs des Powerline Communication-Netzwerks (1) ist, dem der betreffende Stromzähler (200, 301, 400) zugeordnet ist.

7. Verfahren nach einem der Ansprüche 1 oder 2, bei dem der Datenkonzentrator (10) jeden verwaisten Stromzähler identifiziert, wenn es sich um einen Stromzähler handelt, bei dem ein Pfad, der zur Kommunikation mit dem Datenkonzentrator (10) verwendet werden soll, dem Datenkonzentrator (10) zum Zeitpunkt des Auslösens der Sammlung von Informationen nicht bekannt ist. Daraufhin schließt er den besagten verwaisten Stromzähler aus den Klassen aus und fordert jeden verwaisten Stromzähler unabhängig voneinander für die Sammlung von Informationen auf.

8. Computerprogrammprodukt mit Anweisungen zum Implementieren des Verfahrens nach einem der Ansprüche 1 bis 7, wenn die Anweisungen von einem Prozessor (1001) ausgeführt werden.

9. Informationsspeichermedium, das ein Computerprogramm speichert, das Anweisungen zum Implementieren des Verfahrens nach einem der Ansprüche 1 bis 7 enthält, wenn die Anweisungen von dem Informationsspeichermedium gelesen und von einem Prozessor (1001) ausgeführt werden.

10. Datenkonzentrator (10), der so konfiguriert ist, dass er eine Sammlung von Informationen von Stromzählern (200, 301, 400) in einem Powerline Communication-Netzwerk (1) durchführt, wobei der Datenkonzentrator (10) elektronische Schaltkreise enthält, die für Folgendes konfiguriert sind:

- Erhalt (310) einer Aufteilung der Stromzähler (200, 301, 400) in eine Vielzahl von Klassen, wobei eine erste Klasse Stromzähler umfasst, für die während einer vorherigen Ausführung des Verfahrens keine Informationen gesammelt wurden, und mindestens eine zweite und eine dritte Klasse, in die der Rest der Stromzähler aufgeteilt wird. Diese Klassen sind abhängig von der Antwortrate auf Informationsanfragen, die vom Datenkonzentrator übermittelt werden (10) und folgen ab der zweiten Klasse einer Reihenfolge nach absteigenden Werten der genannten Antwortquoten;
- Bildung (312) einer Liste *L* von höchstens *M* Stromzählern, die parallel von dem Datenkonzentrator (10) zum Sammeln von Informationen angefordert werden;
- Sendung (313) einer Informationsanfrage für die Sammlung an jeden Stromzähler in der Liste *L;*
- Für jeden Stromzähler in der Liste *L* gilt: bei Empfang (317) einer Antwort auf eine Informationsanfrage von dem Stromzähler für die Sammlung ODER bei Ablauf (317) einer vordefinierten maximalen Wartezeit seit der Sendung der Informationsanfrage an den Stromzähler, wird der Stromzähler aus der Liste *L* entfernt (318) *und* ein anderer Stromzähler, der parallel zu den verbleibenden Stromzählern in der Liste *L* angefordert werden soll, wird gesucht (315);
Die elektronischen Schaltkreise sind so konfiguriert, dass der Datenkonzentrator (10) der Liste *L* nur dann einen neuen Stromzähler hinzufügt, wenn eine Punktzahl, die für Risiko eines Konflikts zwischen dem neuen Stromzähler und spezifisch jedem der Stromzähler in der Liste *L* repräsentativ ist, unter einem vordefinierten STH-Schwellenwert liegt. Dies ist **dadurch gekennzeichnet, dass** die elektronischen Schaltkreise ferner wie folgt konfiguriert sind:

- Erstellen (311) einer Reihenfolge der Stromzähler (200, 301, 400) in jeder Klasse gemäß einem Gesamtrisiko eines Konflikts, der in dem Powerline Communication-Netzwerk (1) von jedem Stromzähler (200, 301, 400) entstanden sein kann;

Und derart, dass der Datenkonzentrator (10) versucht, die Anzahl der Stromzähler in der Liste *L* innerhalb der Klassen parallel zu maximieren, indem er die Stromzähler gemäß der Reihenfolge der Klassen und dann gemäß der Reihenfolge der Stromzähler gemäß dem Gesamtrisiko eines Konflikts priorisiert.

11. Stromversorgungsnetz mit Stromzählern (200, 301, 400) und einem Datenkonzentrator (10), der für die Durchführung einer Sammlung von Informationen bei den Stromzählern (200, 301, 400) zuständig ist, wobei der Datenkonzentrator (10) nach Anspruch 10 konfiguriert ist.

12. Stromversorgungsnetz nach Anspruch 11, wobei es sich bei den von der Erfassung betroffenen Informationen um Erhebungen von Lastkurven handelt.

## Claims

1. Method for collecting information by a data concentrator (10) from electricity meters (200, 301, 400) in a powerline communication network (1), implemented by the data concentrator (10) and comprising:

- obtaining (310) a distribution of the electricity meters (200, 301, 400) into a plurality of classes, a first class comprising electricity meters (200, 301, 400) for which no information has been collected during a previous implementation of the method, and at least second and third classes wherein the rest of the electricity meters (200, 301, 400) are distributed according to a level of response to information requests transmitted by the data concentrator (10), the classes following a sequencing as from the second class by decreasing values of said response levels;

- establishing (311) a sequencing of the electricity meters (200, 301, 400), in each class, according to an overall risk of collision incurred in the powerline communication network (1) by each electricity meter (200, 301, 400);
- forming (312) a list L of a maximum number M of electricity meters addressed in parallel by the data concentrator (10) for collecting information;
- sending (313) an information request, for said collection, to each electricity meter in the list L;
- for each electricity meter in the list L, on reception (317) of a response to an information request coming from said electricity meter for said collection or on the expiry (317) of a predefined maximum waiting time since the sending (313) of said information request to said electricity meter, removing (318) the electricity meter from the list L and seeking (315) another electricity meter to be addressed in parallel from the remaining electricity meters in the list L;

the method being such that the data concentrator (10) seeks to maximise the number of electricity meters in the list L by prioritising the electricity meters (200, 301, 400) according to the sequencing of the classes, and then according to the sequencing of the electricity meters (200, 301, 400) according to the overall risk of collision, and

such that the data concentrator (10) adds (312) a new electricity meter to the list L only if a score representing a risk of collision between said new electricity meter and specifically each of the electricity meters present in the list L is below a predefined threshold STH.

2. Method according to claim 1, wherein the score representing a risk of collision between two electricity meters (200, 201) depends on the number of common nodes (206, 10) in paths used by the electricity meters in question (200, 201) for communicating with the data concentrator (10) in the powerline communication network (1) and a difference in position of each common node (206, 10) in said paths.

3. Method according to claim 2, wherein the score representing a risk of collision between two electricity meters $m$ and $k$, is defined as follows:

$$S_m^k = \sum_{j=1}^{Q} C \times w^E$$

where $S_m^k$ is the score representing a risk of collision between the two electricity meters $m$ and $k$, $Q$ is said number of common nodes, $j$ is a pointer to said common nodes, $E$ is said difference in position for the common node pointed to by the pointer $j$, $C$ is a default collision cost for each common node where the difference $E$ is zero, and w is an attenuation coefficient lying in the interval [0 ;1[.

4. Method according to claim 3, wherein the overall risk of collision of the electricity meter $m$ is defined by

$$R_m = \sum_{k} S_m^k$$

5. Method according to any one of claims 1 to 3, wherein the overall risk of collision $R$ of each electricity meter (200, 301, 400) is proportional to a number of neighbours in a network neighbourhood of said electricity meter (200, 301, 400).

6. Method according to any one of claims 1 to 3, wherein the overall risk of collision $R$ of each electricity meter (200, 301, 400) is proportional to a density, in terms of electricity meters present, of a zone of the powerline communication network (1) to which the electricity meter (200, 301, 400) in question is allocated.

7. Method according to one of claims 1 and 2, wherein the data concentrator (10) identifies each orphan electricity meter, which is an electricity meter for which a path to be used for communicating with the data concentrator 10) is not known to the data concentrator (10) at the moment of triggering the information collection, excludes said orphan electricity meter from the classes, and independently addresses each orphan electricity meter for collecting information.

8. Computer program product comprising instructions for implementing the method according to any one of claims 1 to 7, when said instructions are executed by a processor (1001).

9. Information storage medium storing a computer program comprising instructions for implementing the method according to any one of claims 1 to 7, when said instructions are read from the information storage medium and executed by a processor (1001).

10. Data concentrator (10) configured for making a collection from electricity meters (200, 301, 400) in a powerline communication network (1), the data concentrator (10) comprising electronic circuitry configured for:

- obtaining (310) a distribution of the electricity meters (200, 301, 400) in a plurality of classes, a first class comprising electricity meters for which no information has been collected during a previous implementation of the method, and at least second and third classes in which the rest of the electricity meters are distributed according to a level of response to information requests transmitted by the data concentrator (10), the classes following a sequencing as from the second class by decreasing values of said response levels;
- obtaining (311) a sequencing of the electricity meters (200, 301, 400), in each class, according to an overall risk of collision incurred in the powerline communication network by each electricity meter (200, 301, 400);
- forming (312) a list $L$ of at a maximum $M$ electricity meters addressed in parallel by the data concentrator (10) for collecting information;
- sending (313) an information request, for said collection, to each electricity meter in the list L;
- for each electricity meter in the list $L$, on reception (317) of a response to an information request coming from said electricity meter for said collection or on expiry (317) of a predefined maximum waiting time since the sending of said information request to said electricity meter, removing (318) the electricity meter from the list $L$ and seeking (315) another electricity meter to be addressed in parallel from the electricity meters remaining in the list $L$;

the electronic circuitry being configured so that the data concentrator (10) seeks to maximise the number of electricity meters in the list $L$ by prioritising the electricity meters according to the sequencing of the classes, and then according to the sequencing of the electricity meters according to the overall risk of collision, and the electronic circuitry being configured so that the data concentrator (10) adds to the list $L$ a new electricity meter only if a score representing a risk of collision between said new electricity meter and specifically each of the electricity meters present in the list $L$ is below a predefined threshold STH.

11. Electrical supply network comprising electricity meters (200, 301, 400) and a data concentrator (10) responsible for making a collection of information from the electricity meters (200, 301, 400), the data concentrator (10) being configured according to claim 10.

12. Electrical supply network according to claim 11, wherein the information to which the collection relates is load curve readings.

DC

100 ~10

~1

~200

205 ~206

201

203 ~202

~20

~204

~400

~300

~302

301 ~30

~401

40

## Fig. 1

| 1001 CPU | 1002 RAM | 1003 ROM |

~100

1000

| HDD 1004 | COM 1005 |

## Fig. 2

Obtention d'une
répartition en N classes  〜 310

Etablir un ordonnancement, par
classe, en fonction d'un risque
global de contention  〜 311

Ajout d'un compteur électrique dans
une liste L de sollicitations en cours  〜 312

Envoi d'une requête
d'informations  〜 313

oui ◁ M compteurs électriques
dans la liste L ? ▷ non
314

Recherche d'un autre
compteur électrique  315

non ◁ Réponse reçue ou
expiration de temps
d'attente maximum ? ▷ oui
317

Compteur
électrique
trouvé? ▷ oui
316   non

Retrait du compteur
électrique de la liste L  318

Durée de collecte TCOL
atteinte ou dépassée ?  oui ▷ Fin de collecte  320
319
non

Fig. 3

Fig. 4

**EP 4 007 219 B1**

## RÉFÉRENCES CITÉES DANS LA DESCRIPTION

**Documents brevets cités dans la description**

- WO 2019016053 A1